# EUROPÄISCHE PATENTSCHRIFT

(11) **EP 1 593 916 B1**
(45) Veröffentlichungstag und Bekanntmachung des Hinweises auf die Patenterteilung: **20.06.2012**
(21) Anmeldenummer: 05004251.4
(22) Anmeldetag: 26.02.2005
(51) Int. Cl.: F24D 19/08

(54) **Entfernung von Gasen in Heizkörpern**
Removal of gas from radiators
Enlèvement de gaz de radiateurs

(30) Priorität: 04.05.2004 DE 102004021987
(43) Veröffentlichungstag der Anmeldung: 09.11.2005
(73) Patentinhaber: WILO SE, 44263 Dortmund (DE)
(72) Erfinder: Strelow, Günter, 44801 Bochum (DE)
(74) Vertreter: Cohausz Hannig Borkowski Wißgott

(56) Entgegenhaltungen:
- WO-A-00/19149
- DE-U1- 20 302 828

## Beschreibung

Die Erfindung betrifft ein Verfahren zum Entfernen der in einem Heizkörper einer Heizungsanlage angesammelten Gase insbesondere Luft, wobei die Flüssigkeit insbesondere das Wasser durch den Heizkörper fördernde Pumpe kurzzeitig in ihrer Förderung insbesondere ihre Drehzahl so weit hochgefahren wird, dass auf Grund der hohen Fließgeschwindigkeit im Heizkörper das dort befindliche Gas insbesondere Luft mitgerissen und durch den Heizkörperauslass herausbefördert wird.

Es ist bekannt, dass sich in Heizkörpern von Gebäuden Luft ansammelt. Hierdurch wird die Heizleistung des Heizkörpers verringert und ferner führt dies zu Geräuschen innerhalb des Heizkörpers. Zum Entlüften des Heizkörpers wird ein am Heizkörper befindliches Entlüftungsventil so lange geöffnet, bis sämtliche Luft entwichen ist. Dieses Entlüften wird von Hausbewohnern ungern durchgeführt, da es zum einen eine zusätzliche Arbeit ist und zum anderen mit der Luft leicht Wasser entweichen kann, das zu Verschmutzungen und Verfleckungen führt.

Aus dem deutschen Gebrauchsmuster Nr. 94 10 317 ist es bekannt, nach dem Einschalten einer Heizungspumpe diese auf die maximale Drehzahl hochzufahren, und diese maximale Drehzahl über einen bestimmten Zeitraum unverändert aufrecht zu erhalten damit die Luft aus dem Heizungssystem entfernt wird. Dies führt aber zu Wirbeln in den Heizkörpern, die zumindest einen Teil der Luftblasen festhalten, so dass eine vollständige Entlüftung nicht erreichbar ist.

Aufgabe der Erfindung ist es, ein Verfahren zum Entlüften von Heizkörpern zu schaffen, das selbsttätig abläuft, ohne ein Entlüftungsventil am Heizkörper öffnen zu müssen und das ein vollständiges Entlüften der Heizkörper erreicht.

Diese Aufgabe wird erfindungsgemäß dadurch gelöst, dass die hoch gefahrene Drehzahl zwischen 50% bis 100 % der maximal möglichen Drehzahl variiert, wobei die Drehzahlvariation unregelmäßig erfolgt.

Durch ein solches Verfahren mit wechselnden Drehzahlen gelingt es, Gase insbesondere Luft aus einem Heizkörper restlos heraus zu bringen, ohne zusätzliche Arbeiten vom Hausbewohner zu erfordern. Das Entlüften kann in regelmäßigen, vorteilhafterweise in kurzen Abständen durchgeführt werden, da es durch die Pumpensteuerung ausgelöst und durchgeführt wird.

Vorteilhafte Ausgestaltungen des erfindungsgemäßen Verfahrens sind in den Unteransprüchen aufgeführt.

Ausführungsbeispiele des erfindungsgemäßen Verfahrens werden im Folgenden näher beschrieben.

Im Wasserkreislauf einer Heizungsanlage befinden sich Heizkörper, die vom Heißwasser durchströmt sind, das von einer Wärmequelle insbesondere einem Heizungskessel erwärmt und von mindestens einer Pumpe umgewälzt wird. Diese, vom Heizungswasser durchflossenen Heizkörper besitzen einen oberen Einlass und einen unteren Auslass. Innerhalb des Heizkörpers befinden sich oft senkrechte Heizkörperkanäle, durch die das Heizungswasser vom oberen Einlass zum unteren Auslass strömt. Vorzugsweise ist im oder am Ein- oder Auslass jedes Heizkörpers eine Pumpe befestigt, die das erwärmte Wasser zu dem jeweiligen Heizkörper fördert.

In dem Heizkörper sammeln sich Gase insbesondere Luft an, die es erfordern, dass sie aus dem Heizkörper herausgebracht werden. Da der Heizkörpereinlass in der Regel im oberen Bereich des Heizkörpers und der Auslass im unteren Bereich sich befindet, gelingt es den Gasen normalerweise nicht den Heizkörper zu verlassen. Um dies dennoch zu erreichen, wird die Pumpe in ihrer Förderung insbesondere in ihrer Drehzahl so weit hochgefahren, dass aufgrund der hohen Fließgeschwindigkeit im Heizkörper das Gas nach unten durch den Heizkörperauslass herausgefördert wird. Hierbei ist die Abtriebsgeschwindigkeit des Mediums insbesondere des Wassers in den senkrechten Heizkörperkanälen größer als die Auftriebsgeschwindigkeit des Gases. Vorzugsweise wird die Drehzahl der Pumpe auf ihre maximal mögliche Drehzahl erhöht. variiert die hochgefahrene Drehzahl zwischen 50 bis 100 Prozent der maximal möglichen Drehzahl, wobei die Drehzahlvariation unregelmäßig erfolgt.

Der Zeitraum des Hochfahrens der Pumpe beträgt 50 bis 120 Sekunden. Die Pumpe kann aber auch für einen kurzen Zeitraum angehalten werden, um die Strömungsprofile sich bildender stehender Wirbel zu destabilisieren. Vorzugsweise ist der Zeitraum des Stillstandes der Pumpe kleiner als 3 Sekunden lang.

Besonders vorteilhaft ist es, wenn während der hohen Förderung der Pumpe einige oder alle anderen Pumpen desselben Heizungskreislaufes nicht oder mit verminderter Leistung fördern, so dass hierdurch die Wirkung noch erhöht wird.

## Patentansprüche

1. Verfahren zum Entfernen der in einem Heizkörper einer Heizungsanlage angesammelten Gase insbesondere Luft, wobei die die Flüssigkeit insbesondere das Wasser durch den Heizkörper fördernde Pumpe kurzzeitig in ihrer Förderung insbesondere ihre Drehzahl so weit hochgefahren wird, dass auf Grund der hohen Fließgeschwindigkeit im Heizkörper das dort befindliche Gas insbesondere Luft mitgerissen und durch den Heizkörperauslass herausbefördert wird, **dadurch gekennzeichnet, dass** die hoch gefahrene Drehzahl während der hohen Förderung zwischen 50% bis 100 % der maximal möglichen Drehzahl variiert, wobei die Drehzahlvariation unregelmäßig erfolgt.

2. Verfahren nach Anspruch 1, **dadurch gekennzeichnet, dass** der Zeitraum des Hochfahrens 30 bis 120 Sekunden beträgt.

3. Verfahren nach Anspruch 1 oder 2, **dadurch gekennzeichnet, dass** die Durchflussmenge soweit erhöht wird, dass die Abtriebsgeschwindigkeit des Mediums in den Heizkörperkanälen größer ist, als die Auftriebsgeschwindigkeit des Gases im Medium.

4. Verfahren nach einem der vorherigen Ansprüche, **dadurch gekennzeichnet, dass** die Drehzahl auf die maximal mögliche Drehzahl erhöht wird.

5. Verfahren nach einem der vorherigen Ansprüche, **dadurch gekennzeichnet, dass** während der hohen Förderung der Pumpe einige oder alle anderen Pumpen desselben Heizungskreislaufes nicht oder mit verminderter Leistung fördern.

6. Verfahren nach einem der vorherigen Ansprüche, **dadurch gekennzeichnet, dass** die Pumpe direkt im oder am Ein- oder Auslass des Heizkörpers angeordnet ist.

## Claims

1. Method for removing gases, particularly air, which have collected in a radiator of a heating system, wherein the output, particularly the speed, of the pump conveying the liquid, particularly the water, through the radiator is briefly increased to such an extent that due to the high flow rate in the radiator, the gas, particularly air, situated therein is pulled along and is removed through the radiator outlet, **characterised in that**, during the high output, the increased speed varies between 50% and 100% of the maximum possible speed, the speed variation being irregular.

2. Method according to claim 1, **characterised in that** the period of increased speed is between 30 seconds and 120 seconds.

3. Method according to claim 1 or 2, **characterised in that** the throughput quantity is increased such that the downward drive rate of the medium in the radiator channels is greater than the upward drive rate of the gas in the medium.

4. Method according to one of the preceding claims, **characterised in that** the speed is increased to the maximum possible speed.

5. Method according to one of the preceding claims, **characterised in that**, during the high output of the pump, some or all other pumps of the same heating circuit do not pump, or only at a reduced output.

6. Method according to one of the preceding claims, **characterised in that** the pump is arranged directly within or in the inlet or outlet of the radiator.

## Revendications

1. Procédé pour éliminer des gaz, en particulier de l'air, s'étant collectés dans un radiateur d'une installation de chauffage, la pompe, véhiculant le liquide, en particulier l'eau, à travers le radiateur, étant brièvement montée en régime de pompage, en particulier quant à sa vitesse de rotation, à un degré tel que, du fait de la haute vitesse d'écoulement dans le radiateur, le gaz, en particulier l'air, se trouvant à cet endroit est entraîné et expulsé par la sortie de radiateur, **caractérisé en ce que** la vitesse de rotation, passée à une valeur élevée pendant le fort pompage, varie dans une fourchette entre 50 % et 100 % de la vitesse de rotation maximale possible, la variation de la vitesse de rotation s'effectuant de manière irrégulière.

2. Procédé selon la revendication 1, **caractérisé en ce que** la durée de la marche à régime élevé est dans la fourchette comprise entre 30 et 120 secondes.

3. Procédé selon la revendication 1 ou 2, **caractérisé en ce que** le débit masse est augmenté à un degré auquel la vitesse descensionnelle du fluide dans les canaux de radiateur est supérieure à la vitesse ascensionnelle du gaz dans le fluide.

4. Procédé selon l'une des revendications précédentes, **caractérisé en ce que** la vitesse de rotation est augmentée pour être portée à la vitesse de rotation maximale possible.

5. Procédé selon l'une des revendications précédentes, **caractérisé en ce que**, pendant le pompage élevé de la pompe, quelques unes ou toutes les autres pompes du même circuit de refroidissement ne pompent pas, ou alors avec une puissance diminuée.

6. Procédé selon l'une des revendications précédentes, **caractérisé en ce que** la pompe est disposée directement dans ou sur l'entrée ou la sortie du radiateur.
